Europäisches Patentamt

European Patent Office

Office européen des brevets

(11) Publication number: **0 472 782 A1**

# EUROPEAN PATENT APPLICATION

(21) Application number: 90202279.7

(22) Date of filing: 27.08.90

(51) Int. Cl.5: **G06F 15/68**

(43) Date of publication of application:
**04.03.92 Bulletin 92/10**

(84) Designated Contracting States:
**DE FR GB IT**

(71) Applicant: **N.V. Philips' Gloeilampenfabrieken**
**Groenewoudseweg 1**
**NL-5621 BA Eindhoven(NL)**

(72) Inventor: **Nijholt, Geert**
**c/o INT. OCTROOIBUREAU B.V. Prof.**
**Holstlaan 6**
**NL-5656 AA Eindhoven(NL)**
Inventor: **Bernsen, Johannes Arnoldus**
**Cornelis**
**c/o INT. OCTROOIBUREAU B.V. Prof.**
**Holstlaan 6**
**NL-5656 AA Eindhoven(NL)**

(74) Representative: **Strijland, Wilfred et al**
**INTERNATIONAAL OCTROOIBUREAU B.V.**
**Prof. Holstlaan 6**
**NL-5656 AA Eindhoven(NL)**

(54) **Method of localizing an extreme amplitude value in multivalued amplitude data field and apparatus for performing the method.**

(57) A method of localizing an extreme amplitude value (maximum or minimum) in a multivalued-amplitude data field includes selecting a collection of amplitude values on the basis of location, the comparing of a candidate extreme amplitude value in the collection with a further amplitude value at a predetermined location related to the collection for upon said particular values being equal localizing the extreme at the predetermined location. An apparatus for performing the method preferably uses a rank value filter for selecting the candidate extreme amplitude value.

## FIELD OF THE INVENTION

The invention relates to a method of localizing an extreme amplitude value in a multivalued-amplitude data fieldand to an apparatus for performing the method.

## BACKGROUND TO THE INVENTION

In the analysis of data patterns, for instance applied to images, a widely known technique is the so-called edge-detection that localizes boundaries of sets of coherent data (objects) in the considered data field. Usually, an edge-detector produces boundary markings with a Gaussian-like profile, representing the edge contrast or edge strength. Thresholding these boundary markings with a fixed threshold in order to generate a binary representation either indicates only those boundary markings that are rich in contrast whilst neglecting the less-pronounced amplitude transitions or leads to a binary version having ill-defined boundary markings with respect to position in the pattern due to the fact that virtual broadening of the relevant boundary markings occurs.

## OBJECT OF THE INVENTION

It is therefore an object of the invention to provide a method that eliminates these shortcomings and as a consequence delivers well-positioned boundaries regardless of the contrast of the amplitude transition. More generally, it is an object of the invention to provide a method of localizing more precisely extreme amplitude values in a multivalued amplitude data field. It is a further object of the invention to provide an apparatus for performing the method.

## SUMMARY OF THE INVENTION

To this end a first version of a method according to the invention of the kind set forth is characterized in that the method includes:
- selecting on the basis of position within the field a collection of amplitude values according to a predetermined pattern of locations within the field;
- determining a candidate extreme amplitude value in the collection on the basis of magnitude;
- associating the candidate extreme amplitude value with a further amplitude value in the collection occurring at a predetermined location of the pattern;
- associating the further amplitude value with a reference value;
- if the candidate extreme value equals the further amplitude value and if the further amplitude value is more extreme than the reference value then confirming that the extreme value occurs at the predetermined location. Only in case the extreme amplitude value (maximum, minimum) is present at the predetermined location the occurrence thereof is confirmed. In this way the non-extreme amplitude values are suppressed.

A second version of a method according to the invention is characterized in that the method includes:
- selecting on the basis of position within the field a collection of amplitude values according to a predetermined pattern of locations within the field;
- selecting a further location within the field position related to said collection, but not being an element of said collection;
- determining a candidate extreme amplitude value in the collection on the basis of magnitude;
- associating the candidate extreme amplitude value with a further amplitude value occurring at the further location;
- associating the further amplitude value with a reference value;
- if the candidate extreme amplitude value equals the further amplitude value or is less extreme than the further amplitude value and if the further amplitude value is more extreme than the reference value then confirming that the extreme amplitude value occurs at the further location. As determining the candidate extreme amplitude value may require relatively extensive processing this second version saves some calculations with respect to the first version.

It should also be noted that there is no restriction as regards the dimension of the data field, that is, no restriction as regards the number of parameters required for the abovesaid identification. Speech for instance is a one-dimensional data field to be treated by the method according to the invention, images represent two-dimensional fields, and the density of a chemical compound in a three-dimensional body, for instance, represents a three-dimensional data field.

A particularly interesting application of the method according to the invention in a two- or more-dimensional data field is characterized in that the collection-selection includes:
- selecting a first orientation;
- detecting an edge, the detection being represented by coherent pronounced amplitude values occurring in the multivalued amplitude data field, the edge having the first orientation;

- establishing on the basis of the first orientation a second orientation to be associated with said predetermined pattern of locations.

The edge detection may be performed according to template-matching, the template representing the edge-structure sought for. To this edge-structure an orientation can be assigned. This coarse localization of a particular edge structure represented by means of a collection of amplitude values showing for instance a Gaussian profile then is followed by a selection of the collection of amplitude values that are associated with a direction perpendicular to the edge-structure sought for. Other orientations than the perpendicular one may be chosen. Thereupon, the precize position of the edge is obtained by operating on the edge data according to the method according to the invention mentioned previously. It is to be noted that the term "edge" also includes any coherent structure that contrasts with its background and to which said first orientation can be assigned.

An apparatus for performing the method according to the invention preferably employs a rank value filter for determining the candidate extreme amplitude value. A rank value filter is a processing device that receives various amplitude values, and produces the amplitude value occurring at a predetermined rank in a sequence of amplitude values ordered on the basis of their magnitudes. The candidate extreme amplitude value is the maximum or the minimum of the set of ordered amplitude values.

It should be noted that the term "location" is to be understood as including a parameter or a set of parameters that enables a unique identification of the whereabouts of the amplitude values within the field regardless of their magnitudes. Thus, "location" as related to an image may have a geometric meaning, while it may be understood as to include "time" with respect to a time-dependent signal such as speech or movement.

## DETAILED DESCRIPTION OF THE INVENTION

The invention will be explained hereinafter by way of example and with reference to the accompanying drawing in which:

Figure 1 visualizes in an example the principle of the method according to the invention;

Figure 2 shows a first diagrammatic example of an apparatus according to the invention; and

Figure 3 shows a second diagrammatic example of an apparatus according to the invention.

## METHOD EXAMPLE

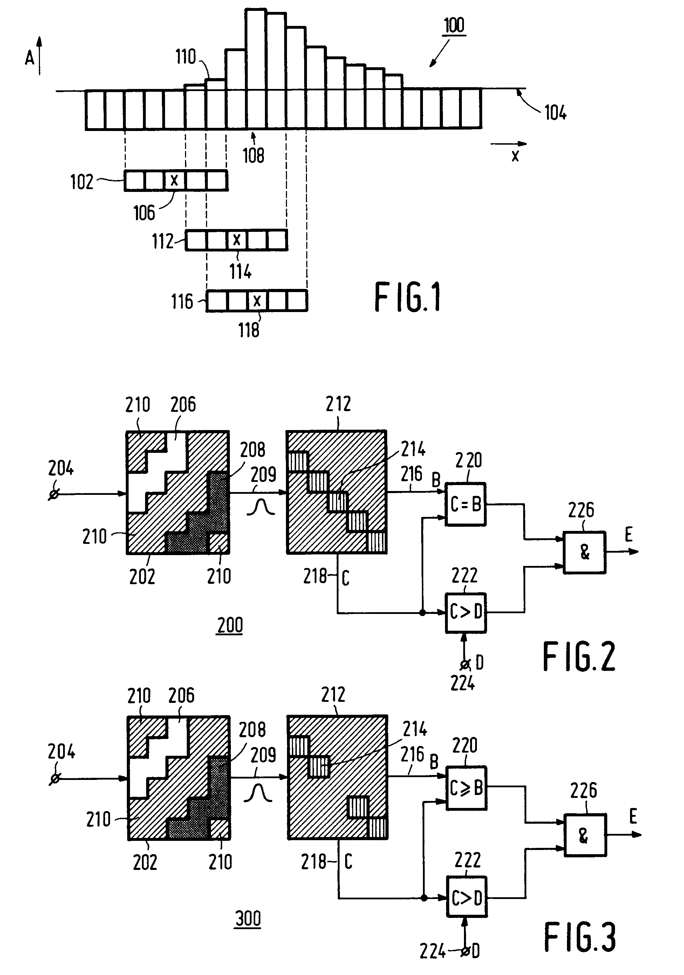

In Figure 1 the principle of the method according to the invention is visualized. Figure 1 shows as an example a one-dimensional multivalued-amplitude data field 100 the amplitude A being a function of the location x, all amplitude values being larger than or equal to zero. A first collection of amplitude values is selected, being indicated by the rectangle 102, the position whereof corresponds with the position of the amplitude values as regards location x. The reference value is indicated by amplitude level 104 and the predetermined location within the selected collection 102 has been indicated by the cross 106. The object now is to find the location of the maximum amplitude value occurring at location 108.

According to the first version of the method according to the invention a candidate extreme value is determined on the basis of magnitude. In other words, the largest amplitude value occurring in the collection 102 is determined, which is marked with reference numeral 110. The conditions under which the identification of the maximum value is established require both the candidate extreme value to be equal to the further amplitude value occurring at the predetermined location (106) and the further amplitude value at the predetermined location at cross 106 to be larger than the reference value 104. This second condition is not complied with and consequently, no extreme value identification is given.

The same steps are performed for a second collection indicated by 112, the predetermined location being indicated by 114. Now all amplitude values are larger than the reference level 104. However, the candidate extreme amplitude value, now at 108, differs from the further amplitude value at 114. Again no extreme value identification is given as the conditions are not fulfilled.

Finally, a third collection 116 is selected, the predetermined location being indicated by reference numeral 118. Again, all amplitude values in the collection 116 are larger than reference level 104. Now, the candidate extreme amplitude value of the collection coincides with the further amplitude value at location 118. Consequently, all requirements being complied with, the maximum is identified as occurring at the location corresponding with 118.

In this example the predetermined location indicated by the cross has been chosen to be the central location as regards the pattern of the collection. In order to take into account substantially asymmetrical amplitude profiles the predetermined location may be chosen to be off-centre.

## FIRST EXEMPLARY APPARATUS

In Figure 2 a first example of an apparatus 200 according to the invention is shown, used in image processing. The apparatus includes an edge detector 202 which examines the image data received at its input 204 in order to determine if an edge with a predetermined orientation is present in the portion of the image under consideration. Edge detection can be performed, for example, by determining under amplitude of a derivative, alternatively the edge detector 202 comprises, for instance, means for performing a template matching. That is, a template representing a particular edge structure is compared with the image data. If the structure of the template corresponds with the current coherent image data, the template matches and the image portion is said to comprise an edge reflecting the particular edge structure. This has been visualized by the box representing the edge detector 202, the box showing a white part 206, a black part 208 and a grey part 210. The white part 206 stands for the bright contribution to the template, the black part 208 stands for the dark contribution to the template while the grey part 210 represents the irrelevant contribution ("don't cares"). At a specific location of the template relative to the image, a detection amplitude is determined, for example, by counting the number of fields in the template where the image matches the black or white part. This determination is performed at several, or even all, positions in the image, thus producing a multivalued edge amplitude data field. The collection of relevant image amplitude values to be processed according to the method according to the invention is selected in such a way as to represent an intersection across the edge amplitude field. Thereupon the candidate extreme amplitude value is determined. This selection and candidate determination is performed in the maximum detector 212 which receives from edge detector 202 amplitude values representing the particular edge which in this representation in general shows a Gaussion profile in a predetermined direction. This has been visualized by the Gaussian bell-shape at detector output 209 and by indicating the collection of selected amplitude values by means of the striped squares 214 drawn in box 212, the coherence thereamong in this example reflecting the direction substantially perpendicular to the edge sought for by edge detector 202. The maximum detector 212 further preferably comprises a rank value filter, which is a device that outputs at output 216 the amplitude value B present at a chosen rank in a sequence of amplitude values ordered according to magnitude, in this example occurring at the highest rank. Also, the maximum detector 212 produces at output 218 the above-mentioned further amplitude value C present at a predetermined location in the collection. This could for instance be accomplished through appropriate line delays that are introduced in order to load the rank value filter 212.

According to the above described method the candidate maximum amplitude value B is associated with the further amplitude value C in comparator 220, while the further amplitude value is compared with a reference value D in comparator 222 that receives the reference value D at input 224. Only under the condition that both requirements are met, that is the candidate extreme amplitude value B equals the further amplitude value C and the further amplitude value C exceeds the reference value D, the maximum is identified as occurring at the predetermined location, which is dealt with by AND-gate 226, that produces a confirmation signal E. This confirmation signal E may be used for selecting relevant features of the edge data, for example for extracting the maximum value occurring for further processing in further processing devices (not shown).

SECOND EXEMPLARY APPARATUS

In Figure 3 a second example of an apparatus according to the invention is shown. The parts being indicated with reference numerals identical to those of the previous Figure represent identical or corresponding parts or aspects. The present Figure 3 differs from the Figure 2 in that now the collection is reduced by leaving out of the collection the further amplitude value at the predetermined location, and in that comparator 220 now examines whether or not the further amplitude value is smaller than the candidate extreme amplitude value in the collection. This has the advantage that the extensive calculations performed by the rank value filter are slightly reduced.

It should be noted that, although the above apparatus have been drawn as to comprise physically separated cooperative parts, the apparatus may be embodied by programmed data processing means.

**Claims**

1. Method of localizing an extreme amplitude value in a multivalued-amplitude data field characterized in that the method includes:
   - selecting on the basis of position within the field a collection of amplitude values according to a predetermined pattern of locations within the field;
   - determining a candidate extreme amplitude value in the collection on the basis of magnitude;
   - associating the candidate extreme amplitude value with a further amplitude value in the collection occurring at a predetermined location of the pattern;
   - associating the further amplitude value with a reference value;

- if the candidate extreme value equals the further amplitude value and if the further amplitude value is more extreme than the reference value then confirming that the extreme value occurs at the predetermined location.

2. Method of localizing an extreme amplitude value in a multivalued-amplitude data field, characterized in that the method includes:
   - selecting on the basis of position within the field a collection of amplitude values according to a predetermined pattern of locations within the field;
   - selecting a further location within the field position related to said collection, but not being an element of said collection;
   - determining a candidate extreme amplitude value in the collection on the basis of magnitude;
   - associating the candidate extreme amplitude value with a further amplitude value occurring at the further location;
   - associating the further amplitude value with a reference value;
   - if the candidate extreme amplitude value equals the further amplitude value or is less extreme than the further amplitude value and if the further amplitude value is more extreme than the reference value then confirming that the extreme amplitude value occurs at the further location.

3. Method as in Claim 1 or 2 applied to a multi-dimensional (two or more) data field, wherein the collection-selection includes:
   - selecting a first orientation;
   - detecting an edge, the detection being represented by coherent pronounced amplitude values occurring in the multivalued amplitude data field, the edge having the first orientation;
   - establishing on the basis of the first orientation a second orientation to be associated with said predetermined pattern of locations.

4. Apparatus for performing a method as in Claim 1, 2 or 3 including a rank value filter for determining the candidate extreme amplitude filter.

5. Apparatus for performing the method as in Claim 3, including:
   - template matching means for determining a presence of the edge having the first orientation;
   - collection selection means coupled with the template matching means for selecting said collection according to the predetermined pattern of locations having the second orientation.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | IEEE TRANSACTIONS ON ACOUSTICS, SPEECH AND SIGNAL PROCESSING, vol. ASSP-35, no. 5, May 1987, pages 680-695; Y.H. LEE et al.: "An edge gradient enhancing adaptive order statistic filter" * Page 680, left-hand column, lines 12-23, right-hand column, lines 27-36; page 681, left-hand column, lines 45-56, right-hand column, lines 1-2 * | 1,2 | G 06 F 15/68 |
| Y | IDEM | 3,4 | |
| Y | EP-A-0 279 297 (FUJITSU) * Column 1, lines 27,28,48-50; column 2, lines 13-39; column 4, lines 20-49; column 5, lines 33-43; column 6, lines 9-12 * | 3,4 | |
| A | OPTICAL ENGINEERING, vol. 27, no. 10, October 1988, pages 854-860; J.A. SAGHRI et al.: "Feature-based image bandwidth compression" * Paragraph: 1: "Introduction"; figure 1; table 1 * | 5 | TECHNICAL FIELDS SEARCHED (Int. Cl.5) G 06 F 15/68 G 06 K 9/36 |
| A | PATENT ABSTRACTS OF JAPAN, vol. 10, no. 57 (P-434)[2114], 7th March 1986; & JP-A-60 201 484 (FUJITSU) 11-10-1985 * Purpose; constitution * | | |

The present search report has been drawn up for all claims

| Place of search | Date of completion of the search | Examiner |
|---|---|---|
| THE HAGUE | 19-02-1991 | GONZALEZ ORDONEZ O. |

EPO FORM 1503 03.82 (P0401)